# EUROPEAN PATENT SPECIFICATION

(11) **EP 1 620 506 B1**
(45) Date of publication and mention of the grant of the patent: **09.03.2011**
(21) Application number: 04760506.8
(22) Date of filing: 16.03.2004
(51) Int. Cl.: C08L 67/02, C08K 7/02

(54) **POLYESTERS CONTAINING MICROFIBERS, AND METHODS FOR MAKING AND USING SAME**
MIKROFASERN ENTHALTENDE POLYESTER UND VERFAHREN ZU DEREN HERSTELLUNG UND VERWENDUNG
POLYESTERS CONTENANT DES MICROFIBRES ET LEURS PROCEDES DE FABRICATION ET D'UTILISATION

(30) Priority: 02.05.2003 US 467342 P
(43) Date of publication of application: 01.02.2006
(60) Divisional application: 10185562.5
(73) Proprietor: E.I. DU PONT DE NEMOURS AND COMPANY, Wilmington, DE 19898 (US)
(72) Inventor: HANSEN, Steven, M., Old Hickory, TN 37138 (US); HAYES, Richard, Allen, Beaumont, TX 77706 (US); SAMUELS, Sam, Louis, Landenberg, PA 19350 (US); FRANCES, Arnold, Glen Allen, VA 23059 (US)
(74) Representative: Hirsch, Marc-Roger
(86) International application number: PCT/US2004/009433
(87) International publication number: WO 2004/099314

(56) References cited:
- WO-A-02/083794
- WO-A-03/044100
- US-A- 6 068 922
- US-A- 6 103 779
- PATENT ABSTRACTS OF JAPAN vol. 0144, no. 66 (C-0768), 11 October 1990 (1990-10-11) & JP 2 191635 A (ASAHI CHEM IND CO LTD; others: 01), 27 July 1990 (1990-07-27)
- PATENT ABSTRACTS OF JAPAN vol. 0132, no. 11 (C-597), 17 May 1989 (1989-05-17) & JP 1 029434 A (ASUKU:KK), 31 January 1989 (1989-01-31)

## Description

### FIELD OF THE INVENTION

The present invention is directed to polyesters containing microfibers, and to methods for making and using the polyesters.

### BACKGROUND OF THE INVENTION

Thermoplastic polyester resins such as polyethylene terephthalate and polybutylene terephthalate have excellent mechanical properties, chemical resistance and dimensional stability and are widely used in applications such as injection molding, textile and monofilament fibers, and films.

Fiber or particulate modification of thermoplastics, including thermoplastic polyesters, is well known and widely practiced. Fiber and particulate additives can be used as a filler to lower the overall costs of the thermoplastic. Additives can also be used to modify and improve mechanical properties or modify chemical resistance. Fibers can be added to polymers to make composites including advanced engineering composites, wherein the reinforcing fibers significantly modify the properties of the thermoplastic material. Advanced composites containing fibers such as Kevlar® fibers or carbon fiber with a thermoplastic polyester matrix are known and widely used in articles such as sporting goods.

Recently, much research is being conducted to learn how finely divided additives with particle sizes on the order of nanometers can be used to modify material properties. For example, US Patent No. 6,020,419 discloses the effect of relatively small amounts of a modifier can significantly impact properties such as scratch resistance or electrical properties.

WO 03/044100 discloses a coating composition comprising a micropulp which is a fibrous organic material having a volume average length ranging from 0.01 µm to 100 µm. The coating composition also contains a binder which can be a polyester. The percentage by weight of the micropulp based on the total weight of the composition can be 0.01-25 weight %.

US 6 068 922 discloses a polyester composition comprising a thermoplastic polyester and from 1 to 85 weight percent of aramid fibers based on the total weight of the polyester composition. Said microfibers have a volume average length of from 0.1 to 8 mm and a diameter of 5 to 15 µm.

WO 02/083794 discloses a polyester composition comprising a thermoplastic polyester such as Hytrel and from 0.01 to 30 weight percent of aramid fibers, based on the total weight of the polyester composition, wherein said microfibers have a length of from 0.1 to 8 mm. Their diameter is preferably less than or equal to 150 µm.

JP 02-191635 discloses a polyester composition comprising a thermoplastic polyester, from 20 to 60 weight percent of reinforcing fibers having a length of 1-50 mm and a diameter of 3-20 µm, and mountain leather. The composition may further contain aramid pulp in an amount of 1-50 wt%.

US 6 103 779 discloses thermoset compositions reinforced with fibers. The compositions may contain polyester resins. The percentage of reinforcing fibers represents at least 10 weight % based on the total weight of the composition. The average length of the fiber is at least 0.25 mm.

EP-A-1 300 445 discloses an aromatic polycarbonate resin composition comprising:
100 parts by weight of a resin component consisting of:
   50 to 100 wt% of an aromatic polycarbonate resin and
   0 to 50 wt% of at least one thermoplastic resin selected from the group consisting of:
      - a thermoplastic polyester resin and
      - a styrene unit component-containing resin having a rubber component content of less than 40 wt%;
   and
1 to 100 parts by weight of wollastonite fibers having a number average length of 10 µm or less and a number average diameter of 4 µm or less and include particles having a fiber length of 5 to 25 µm in a number proportion of less than 50 % of the total.

JP 2000-256505 discloses a resin composition containing 95 - 30 wt % of a thermoplastic resin and 5 - 70 wt % of wollastonite fibers.

US 4,123,415 discloses a reinforced thermoplastic composition comprising a high molecular weight polyester resin and a reinforcement comprising glass fibers, said glass fibers having an average standard diameter of no greater than about 12.7 µm (0.0005 inch) and a length lying between 0.127 µm (5x10⁻⁶ inch) and 0.318 mm (0.125 inch). The amount of glass fibers vary from about 1 to about 60% by weight based on 100 parts by weight of the polyester resin and the glass.

A need remains for improved polymeric materials that can withstand melt processing while maintaining their structural properties, and also for polymeric materials having abrasion resistance when used in applications such as films.

### SUMMARY OF THE INVENTION

One aspect of the invention is a polyester composition comprising a thermoplastic polyester and microfibers. The polyester composition comprises from 0.1 to 2.5 weight percent of microfibers, based on the total weight of the polyester composition, wherein said microfibers have a volume average length of from 0.1 to less than 100 µm and a diameter of 8 to 12 µm, said microfibers comprising organic microfibers, in some embodiments, the polyester is a homopolymer. In some embodiments, the polyester is a copolymer. In some preferred embodiments, the polyester is polyethylene terephthalate. In other preferred embodiments, the polyester is a copolyester comprising ethylene terephthalate and one or more comonomers. In some preferred embodiments, the microfibers are organic.

Another aspect of the invention is a process for making the above polyester composition.

The process includes providing a slurry containing the microfibers, contacting the slurry with one or more polymerizable components. In some embodiments, the polymerizable components comprise monomers.

Another aspect of the invention is a process for making a monofilament. The process includes melt spinning a thermoplastic polyester containing 0.1 to 2.5 percent microfibers wherein said microfibers have a volume average length of from 0.1 to less than 100 µm and a diameter of 8 to 12 µm, said microfibers comprising organic microfibers.

A further aspect of the invention is a molded part made from a thermoplastic polyester containig 0.1 to 2.5 weight percent microfibers wherein said microfibers have a volume average length of from 0.1 to less than 100 µm and a diameter of 8 to 12 µm, said microfibers comprising organic microfibers.

A further aspect of the invention is a cast film made from a thermoplastic polyester containing from 0.1 to 2.5 weight percent microfibers wherein said microfibers have a volume average length of from 0.1 to less than 100 µm and a diameter of 8 to 12 µm, said microfibers comprising organic microfibers. In some embodiments, the film is uniaxially or biaxially oriented.

These and other aspects of the invention will be apparent to those skilled in the art in view of the following disclosure and the appended claims.

### DETAILED DESCRIPTION OF THE INVENTION

The present invention provides thermoplastic polyesters and thermoplastic polyester compositions containing microfibers. The polyesters offer improved melt processing and improved polymer abrasion in comparison to conventional polyesters not containing microfibers. The present invention also includes processes for making the polyesters containing microfibers. The processes provide improved dispersion of the microfibers in the polyesters such that the particles within the polymer are well separated and do not reagglomerate. While it is not intended that the present invention be bound by any particular theory, it is believed that some of the observed improved properties of polyesters containing microfibers and the dispersion of the microfibers within the polyesters, as disclosed herein, are due in part to an interaction between functional groups on the polyesters and functional groups on the microfibers. The term "polyester composition" is used herein to refer to compositions including a polyester, microfibers, and any optional additives and/or processing aids that can be present.

The term "microfibers", as used herein, refers to particulate materials that can be generally described as fibers because of their aspect ratios. Preferred microfibers for use in the polyesters and in the processes for making the polyesters as disclosed herein have aspect ratios from 10:1 to 500:1, more preferably from 25:1 to 300:1. The fibers have volume average lengths of 0.1 to 100 microns and diameters of 8 to 12 microns. Generally the microfibers also have an average surface area ranging from 25 to 500 square meters per gram. However, these dimensions are approximations only. Moreover, the use of the term "diameter" is not intended to convey that the microfibers are required to be cylindrical in shape or circular in cross-section. The microfibers may also be referred to as "nanofibers", which is an indication that in at least one dimension, the size of the particulate materials is on the order of nanometers. Microfibers, particularly when in the form of a slurry or dispersion, may also be referred to as "micropulp", or as "nanopulp". The term "microfibers" is used herein to refer to the fibers whether or not they are in the form of a slurry.

For incorporation into polyesters, the microfibers can be provided in the form of a slurry. The slurry includes a liquid and the microfibers dispersed therein. The slurry preferably contains at least 0.01 weight percent of microfibers, based on the total weight of the slurry and microfibers. Although the slurry can contain up to 25 or 50 weight percent fibers, the practical upper limit of the amount of microfibers that can be in the slurry is determined by handling and equipment requirements. Preferably, the slurry contains at least 0.1 weight percent of microfibers. Also preferably, the slurry contains 15 weight percent or less of microfibers, based on the total weight of the slurry and microfibers, more preferably 10 weight percent or less, and even more preferably, 5 weight percent or less. In some preferred embodiments, the slurry contains from 0.1 weight percent to 2.5 weight percent microfibers, and even more preferably, the slurry contains from 0.2 to 1 weight percent microfibers. The slurry can be incorporated into the polyester using conventional mixing and pumping equipment.

A slurry of the microfibers can be made from a variety of starting materials such as, for example, pulp, short fiber, fibrids or mixtures derived therefrom. The starting materials are generally in fiber form and may also be referred to herein as "fibers". The starting materials are processed into microfibers. Processing can be accomplished by contacting the starting material with a liquid medium and agitating the starting material and liquid medium to reduce the size of and modify the starting material. The processing of the fibers to form the microfibers preferably results in the microfibers being substantially uniformly dispersed in the liquid medium. Optionally, the liquid medium can contain one or more solid components. The presence of such solid components may aid in the processing. Processes for preparing a slurry of microfibers suitable for use in making the polyesters are described in concurrently-filed and co-owned patent application entitled "Polymer Precursor Dispersion Containing a Micropulp and Method of Making the Dispersion", Appln. No. 10/428,294. Generally, a process for preparing a slurry of microfibers includes agitation of fibers, such as commercially available fibers in a dispersion.

Agitation can be accomplished, for example, by refining starting material fibers between rotating discs to cut and shear the fibers into smaller pieces. Processed fibers differ from short fibers by having a multitude of fibrils extending from the body of each pulp particle. The fibrils provide minute hair-like anchors for reinforcing composite materials and cause the processed fibers to have a very high surface area.

A particularly useful starting material is aramid pulp, which is well known in the art and can be made by refining aramid fibers to fibrillate the short pieces of aramid fiber material. Such pulps have been reported to have a surface area in the range of 4.2 to 15 meters²/gram and a Kajaani weight average length in the range of 0.6 to 1.1 millimeters (mm). Such pulps have high volume average length, compared to the micropulp. For example, Style 1 F543 aramid pulp available from E. I. du Pont de Nemours and Company has a Kajaani weight average length in the range of 0.6 to 0.8 mm, and when laser defraction is used to measure this pulp the volume average length is 500 to 600 micrometers (0.5 to 0.6 mm). An alternate method of making aramid pulp directly from a polymerizing solution is disclosed in U.S. Patent No. 5,028,372. Short fiber (sometimes called floc) is made by cutting continuous filament into short lengths without significantly fibrillating the fiber. Short fiber length typically ranges from about 0.25 mm to 12 mm. Short fibers suitable for use in the polyesters are the reinforcing fibers disclosed in U.S. Patent No. 5,474,842. Fibrids are non-granular film-like particles having an average maximum length or dimension in the range of 0.2 to 1 mm with a length-to-width aspect ratio in the range of 5:1 to 10:1. The thickness dimension is on the order of a fraction of a micron. Aramid fibrids are well known in the art and can be made in accordance with the processes disclosed in U.S. Patent Nos. 5,209,877, 5,026,456, 3,018,091 and 2,999,788. The processes typically include adding a solution of organic polymer in solvent to another liquid that is a non-solvent for the polymer but is miscible with the solvent, and applying vigorous agitation to cause coagulation of fibrids. The coagulated fibrids are wet milled, separated, and dried to yield clumps of fibrids having a high surface area; the clumps are then opened to yield a particulate fibrid product.

Microfibers for use in the polyesters can be organic or inorganic. The organic microfibers can contain any known organic material used for making fibers. Examples of materials of which organic fibers can be made include synthetic polymers such as aliphatic polyamides, polyesters, polyacrylonitriles, polyvinyl alcohols, polyolefins, polyvinyl chlorides, polyvinylidene chlorides, polyurethanes, polyfluorocarbons, phenolics, polybenzimidazoles, polyphenylenetriazoles, polyphenylene sulfides, polyoxadiazoles, polyimides, aromatic polyamides; and natural fibers, such as cellulose, cotton, silk, and/or wool fibers.

Some commercially available organic fibers useful as a starting material for making microfibers include ZYLON® PBO-AS (poly(p-phenylene-2,6-benzobisoxazole)) fiber, ZYLON® PBO-HM (poly(p-phenylene-2,6-benzobisoxazole)) fiber, DYNEEMA® SK60 and SK71 ultra high strength polyethylene fiber, available from Toyobo, Japan; Celanese VECTRAN® HS pulp, EFT 1063-178, available from Engineering Fibers Technology, Shelton, Connecticut; CFF Fibrillated Acrylic Fiber, available from Sterling Fibers, Inc., Pace, Florida; and Tiara Aramid KY-400S Pulp, available from Daicel Chemical Industries, Ltd., 1 Teppo-Cho, Sakai City Japan.

For some applications, preferred materials for fibers are certain aromatic polyamide polymers, especially poly(p-phenylene terephthalamide) and/or poly(m-phenylene isophthalamide), which are also known as aramid fibers. As used herein, an "aramid" is a polyamide having amide (-CONH-) linkages of which at least 85% are attached directly to two aromatic rings.

The fibers can contain known additives. In aramid fibers, one or more other polymeric materials can be blended with the aramid. For example, aramid fibers can contain up to 10 percent, by weight, of other polymeric materials. If desired, copolymers having as much as 10 percent of one or more other diamines substituted for the diamine of the aramid or as much as 10 percent of other diacid chloride substituted for the diacid chloride of the aramid. Such organic fibers are disclosed in U.S. Patent Nos. 3,869,430; 3,869,429; 3,767,756; and 2,999,788. Preferred aromatic polyamide organic fibers are available as KEVLAR® fibers; KEVLAR® aramid pulp, style 1 F543; 1.5 mm KEVLAR® aramid floc style 6F561; and NOMEX® aramid fibrids style F25W, all available from E.I. du Pont de Nemours and Company, Wilmington, Delaware.

Examples of inorganic fibers that can be used include fibers made of glass, carbon fibers, carbon nanotubes, silica carbide fibers, mineral fibers made of, for example, wollastonite (CaSiO₃), and whiskers, which are single crystals of materials such as, for example, silcon carbide, boron, and boron carbide, and are described in Plastics Additives, 3rd, Gachter and Muller, Hanser Publishers, New York, 1990.

Preferred liquid media for the slurry include aqueous and non-aqueous solvents; monomers; and polymer precursors. Polymer precursors suitable as liquid media for the slurry are disclosed in concurrently-filed and co-owned patent application entitled "Polymer Precursor Dispersion Containing a Micropulp and Method of Making the Dispersion", Appln. No. 10/428,294.

An exemplary preferred polymer precursor useful as a liquid medium is ethylene glycol.

Suitable polyesters in which the microfibers can be dispersed include homopolymer polyesters such as polypropylene terephthalate, polyethylene naphthalate, polybutylene terephthalate, and polycyclohexane terephthalate; and copolyesters. Preferred polyesters are polyethylene terephthalate and copolymers of polyethylene terephthalate and comonomers such as dimethyl isophthalate, dimethyl naphthalate, diethylene glycol, propanediol, butanediol, cyclohexane dimethanol, of dimethyl cyclohexanedicarboxylate.

The polyester compositions of the present invention may be blended with other polymeric materials. Examples of blendable polymeric materials include polyethylene, high density polyethylene, low density polyethylene, linear low density polyethylene, ultralow density polyethylene, polyolefins, poly(ethylene-co-glycidylmethacrylate), poly(ethylene-co-methyl (meth)acrylate-co-glycidyl acrylate), poly(ethylene-co-n-butyl acrylate-co-glycidyl acrylate), poly(ethylene-co-methyl acrylate), poly(ethylene-co-ethyl acrylate), poly(ethylene-co-butyl acrylate), poly(ethylene-co-(meth)acrylic acid), metal salts of poly(ethylene-co-(meth)acrylic acid), poly((meth)acrylates), such as poly(methyl methacrylate), poly(ethyl methacrylate), poly(ethylene-co-carbon monoxide), poly(vinyl acetate), poly(ethylene-co-vinyl acetate), poly(vinyl alcohol), poly(ethylene-co-vinyl alcohol), polypropylene, polybutylene, polyesters, poly(ethylene terephthalate), poly(1,3-propylene terephthalate), poly(1,4-butylene terephthalate), PETG, poly(ethylene-co-1,4-cyclohexanedimethanol terephthalate), polyetheresters, poly(vinyl chloride), PVDC, poly(vinylidene chloride), polystyrene, syndiotactic polystyrene, poly(4-hydroxystyrene), novalacs, poly(cresols), polyamides, nylon, nylon 6, nylon 46, nylon 66, nylon 612, polycarbonates, poly(bisphenol A carbonate), polysulfides, poly(phenylene sulfide), polyethers, poly(2,6-dimethylphenylene oxide), polysulfones, copolymers of ethylene with alkyl (meth)acrylates, such as the Elvalov® polymers available from E.I. du Pont and Company of Wilmington, DE, sulfonated aliphatic-aromatic copolyesters, such as are sold under the Biomax® tradename by E.I. du Pont and Company of Wilmington, DE" aliphatic-aromatic copolyesters, such as are sold under the Eastar Bio®tradename by the Eastman Chemical Company, (Fastar Bio® is chemically believed to be essentially poly(1,4-butylene adipate-co-terephthalate, (55:45, molar)), sold under the Ecoflex® tradename by the BASF Corporation, (Ecoflex® is believed to be essentially poly(1,4-butylene terephthalate-co-adipate, (50:50, molar) and may be chain-extended through the addition of hexamethylenediisocyanate), and sold under the EnPol® tradename by the Ire Chemical Company, aliphatic polyesters, such as poly(1,4-butylene succinate), (Bionolle® 1001, from Showa High Polymer Company), poly(ethylene succinate), poly(1,4-butylene adipate-co-succinate), (Bionolle® 3001, from the Showa High Polymer Company), and poly(1,4-butylene adipate) as, for example, sold by the Ire Chemical Company under the tradename of EnPol®, sold by the Showa High Polymer Company under the tradename of Bionolle®, sold by the Mitsui Toatsu Company, sold by the Nippon Shokubai. Company, sold by the Cheil Synthetics Company, sold by the Eastman Chemical Company, and sold by the Sunkyon Industries Company, poly(amide esters), for example, as sold under the Bak® tradename by the Bayer Company, (these materials are believed to include the constituents of adipic acid, 1,4-butanediol, and 6-aminocaproic acid), polycarbonates, for example such as poly(ethylene carbonate) sold by the PAC Polymers Company, poly(hydroxyalkanoates), such as poly(hydroxybutyrate)s, poly(hydroxyvalerate)s, poly(hydroxybutyrate-co-hydroxyvalerate)s, for example such as sold by the Monsanto Company under the Biopol® tradename, poly(lactide-co-glycolide-co-caprolactone), for example as sold by the Mitsui Chemicals Company under the grade designations of H100J, S100, and T100, poly(caprolactone), for example as sold under the Tone(R) tradename by the Union Carbide Company and as sold by the Daicel Chemical Company and the Solvay Company, and poly(lactide), for example as sold by the Cargill Dow Company under the tradename of EcoPLA® and the Dianippon Company and copolymers thereof and mixtures thereof.

In some preferred embodiments of the invention, the polyesters of the invention are blended with one or more tougheners. Tougheners include any material that enhances the durability of a polymer or increases its resistance to impact. Examples of tougheners suitable for use in the present invention include high density polyethylene; glycidyl-functional polymers, such as poly(ethylene-co-glycidylmethacrylate), poly(ethylene-co-methyl (meth)acrylate-co-glycidyl acrylate), poly(ethylene-co-n-butyl acrylate-co-glycidyl acrylate); poly((meth)acrylates), such as poly(methyl methacrylate), poly(ethyl methacrylate); polystyrene, syndiotactic polystyrene, poly(4-hydroxystyrene); novalacs; poly(cresols); polyamides; nylon, including nylon 6, nylon 46, nylon 66, nylon 612; copolymers of ethylene with alkyl (meth)acrylates, such as the Elvaloy® polymers available from E.I. du Pont and Company of Wilmington, DE; polycarbonates, such as poly(bisphenol A carbonate); polysulfides, and poly(phenylene sulfide).

In addition, the polyester compositions produced by the process of the present invention may include one or more fillers. Fillers may tend to increase the Young's modulus, improve the dead-fold properties, improve the rigidity of the film, coating, laminate, or molded article, decrease the cost, and reduce the tendency of the film, coating, or laminate to block or self-adhere during processing or use. The use of fillers has also been found to produce plastic articles which have many of the qualities of paper, such as texture and feel, as disclosed by, for example, Miyazaki, et. al., in US 4,578,296.

Fillers suitable for use in the present invention include inorganic, organic and clay fillers, for example, wood flour, gypsum, talc, mica, carbon black, wollastonite, montmorillonite minerals, chalk, diatomaceous earth, sand, gravel, crushed rock, bauxite, limestone, sandstone, aerogels, xerogels, microspheres, porous ceramic spheres, gypsum dihydrate, calcium aluminate, magnesium carbonate, ceramic materials, pozzolamic materials, zirconium compounds, xonotlite, (a crystalline calcium silicate gel), perlite, vermiculite, hydrated or unhydrated hydraulic cement particles, pumice, perlite, zeolites, kaolin, clay fillers, including both natural and synthetic clays and treated and untreated clays, such as organoclays and clays which have been surface treated with silanes and stearic acid to enhance adhesion with the polyester matrix, smectite clays, magnesium aluminum silicate, bentonite clays, hectorite clays, silicon oxide, calcium terephthalate, aluminum oxide, titanium dioxide, iron oxides, calcium phosphate, barium sulfate, sodium carbonate, magnesium sulfate, aluminum sulfate, magnesium carbonate, barium carbonate, calcium oxide, magnesium oxide, aluminum hydroxide, calcium sulfate, barium sulfate, lithium fluoride, polymer particles, powdered metals, pulp powder, cellulose, starch, chemically modified starch, thermoplastic starch, lignin powder, wheat, chitin, chitosan, keratin, gluten, nut shell flour, wood flour, corn cob flour, calcium carbonate, calcium hydroxide, glass beads, hollow glass beads, seagel, cork, seeds, gelatins, wood flour, saw dust, agar-based materials, reinforcing agents, such as glass fiber, natural fibers, such as sisal, hemp, cotton, wool, wood, flax, abaca, sisal, ramie, bagasse, and cellulose fibers, carbon fibers, graphite fibers, silica fibers, ceramic fibers, metal fibers, stainless steel fibers, recycled paper fibers, for example, from repulping operations. Titanium dioxide is a preferred filler; however, essentially any filler material known in the art may find use in the polyester compositions of the present invention.

The processes of the invention include providing a slurry containing the microfibers, contacting the slurry with one or more polymerizable components such as, for example, monomers. One process includes ester exchange of dimethyl terephthalate or other suitable ester precursor and ethylene glycol or other suitable glycol, preferably in the presence of an exchange catalyst. Exemplary exchange catalysts include manganese acetate tetrahydrate, zinc acetate dihydrate. For example, the slurry can be contacted with dimethyl terephthalate and ethylene glycol and formed into polymer by ester exchange followed by polycondensation. As a further example, the slurry may be contacted with the product of an ester exchange reaction, such as bis(2-hydroxyethyl)terephthalate, and then incorporated into a polymer by polycondensation of monomers at appropriately high temperatures and low pressures, and polymerizing the monomers.

Another exemplary process for preparing a polyester composition containing microfibers includes polyesterification followed by polycondensation. Such processes are preferably carried out in the presence of polycondensation catalysts, such as antimony or titania-based polycondensation catalysts. For example, the slurry containing the microfibers can be introduced into a polyester after an ester exchange reaction and before polycondensation. Preferably, the concentration of microfibers in the slurry for use in such processes is from 0.01 to 2.5 weight percent mirofibers in the slurry, more preferably from 0.2 to 1.0 weight percent. The amount of microfibers in the resulting polymer is from 0.1 to 2.5 weight percent, based on the weight of the polymer and microfibers.

The processes of the invention may also include the step of blending the polyester composition with one or more blendable polymeric materials. One or more of the blendable polymeric materials may also function as a toughener.

The polymeric material to be blended with the polymer of the present invention may be added to the polyester composition of the present invention at any stage during the polymerization or after the polymerization is completed. For example, the polymeric material may be added with the polyester monomers at the start of the polymerization process. Alternatively, the polymeric material may be added at an intermediate stage of the polymerization, for example, as the precondensate passes into the polymerization vessel. As yet a further alternative, the polymeric material may be added after the polyester exits the polymerizer. For example, the polyester and the polymeric material may be melt fed to any intensive mixing operation, such as a static mixer or a single- or twin-screw extruder and compounded with the polymeric material.

As yet a further method to produce blends of the polyesters and the polymeric material, the polyester may be combined with the polymeric material in a subsequent post polymerization process. Typically, such a process would involve intensive mixing of the molten polyester with the polymeric material. Said intensive mixing may be provided through static mixers, Brabender mixers, single screw extruders, twin screw extruders. In a typical process, the polyester would be dried. The polymeric material may also be dried. The dried polyester may then be mixed with the polymeric material.

Alternatively, the polyester and the polymeric material may be cofed through two different feeders. In an extrusion process, the polyester and the polymeric material would typically be fed into the back, feed section of the extruder. However, this should not be considered limiting. The polyester and the polymeric material may be advantageously fed into two different locations of the extruder. For example, the polyester may be added in the back, feed section of the extruder while the polymeric material is fed (or "side-stuffed") into the front of the extruder near the die plate. The extruder temperature profile is set up to allow the polyester to melt under the processing conditions. The screw design will also provide stress and, in turn, heat, to the resin as it mixes the molten polyester with the polymeric material.

Alternatively, the polymeric material may be blended with the polyester material during the formation of the films and coatings of the present invention, as described below.

The processes of the invention may also include the step of adding one or more fillers to the polyester composition. The filler may be added to the polymer of the present invention at any stage during the polymerization of the polymer or after the polymerization is completed.

For example, the filler may be added with the polyester monomers at the start of the polymerization process. This is preferable for, for example, the silica and titanium dioxide fillers, to provide adequate dispersion of the fillers within the polyester matrix. Alternatively, the filler may be added at an intermediate stage of the polymerization, for example, as the precondensate passes into the polymerization vessel. As yet a further alternative, the filler may be added after the polyester exits the polymerizer. For example, the polyester compositions produced by the processes of the present invention may be melt fed to any intensive mixing operation, such as a static mixer or a single- or twin-screw extruder, and compounded with the filler.

As yet a further method to produce the filled polyester compositions of the present invention, the polyester composition may be combined with the filler in a subsequent post polymerization process. Typically, such a process would involve intensive mixing of the molten polyester with the filler. Said intensive mixing may be provided through static mixers, Brabender mixers, single screw extruders, twin screw extruders. In a typical process, the polyester would be dried. The dried polyester may then be mixed with the filler. Alternatively, the polyester and the filler may be cofed through two different feeders. In an extrusion process, the polyester and the filler would typically be fed into the back, feed section of the extruder. However, this should not be considered limiting.

The polyester and the filler may also advantageously be fed into two different locations of the extruder. For example, the polyester may be added in the back, feed section of the extruder while the filler is fed (or "side-stuffed") in the front of the extruder near the die plate. The extruder temperature profile is set up to allow the polyester to melt under the processing conditions. The screw design will also provide stress and, in turn, heat, to the resin as it mixes the molten polyester with the filler. Such processes to melt mix in fillers is disclosed, for example, by Dohrer, et. al., in US 6,359,050.

Alternatively, the filler may be blended with the polyester materials during the formation of the films and coatings of the present invention, as described below.

Polyesters containing microfibers, as disclosed herein, can be used in making a variety of finished articles. Generally, the polyesters containing microfibers can be used to make any finished article for which polyesters are useful. It has been found that articles made from the polyesters have a desirable balance of physical properties and abrasion resistance for a wide variety of end uses.

The polyesters can be used to make monofilaments by known processes such as melt spinning. Monofilaments of the polyesters are useful in making fabrics for use, for example, in making industrial belts.

The polyesters are also useful in making molded parts. Molded parts can be made using any known processes used in making molded parts from polyesters.

The polyesters are also useful in making films. Films that can be made from the polyesters include cast films, blown films, and oriented films. Films made from the polyesters containing microfibers have been found to have unique surface characteristics. In particular, the presence of the microfibers increases the roughness of the surface of the film, which may be desirable for some applications. An exemplary film preparation process is as follows. A 2 mil cast film was produced on a 1-1/2" Davis portable extruder with a 14" flat sheet die and a chilled casting drum. The 1-1/2" Davis is a 24/1 UD extruder has four barrel zones which are automatically cooled in case of temperature override. Cooling is done by a closed loop water system. A barrier screw with a mixing tip was used. 2 mil film was produced using a die gap of 5 mils. The resin was dried for >12 hours @ 225F, in a desiccated oven, prior to extrusion.

Processing conditions:

| **RPM** | **Feed Zones** | **Barrel and die zones** | **head pressure** | **Chillroll temp** | **melt temp** | **takeoff** |
|---|---|---|---|---|---|---|
| 77 | 480F | 500F | 610 psi | 90 F | 527 F | 169 in/min |

### EXAMPLES

### Example 1

A slurry of fibers was prepared as follows. To a tank charged with 245 lbs of ethylene glycol, 2% or 5 lbs of dry Kevlar® 1 F543 pulp was added (250 lbs total batch size). The batch was recirculated through a ball mill at approximately 8 lbs/ min for a total of 16 hrs.

A nominal 4000 lb vertical autoclave with an agitator, vacuum jets and a monomer distillation still located above the clave portion of the autoclave was used to prepare batches of polyester containing microfibers of milled Kevlar® pulp. The monomer still was charged with 1800 liters (approximately 4500 lbs) of dimethyl terephthalate (DMT) and 1050 liters (approximately 2600 lbs) of ethylene glycol. A manganese acetate was used as the ester exchange catalyst and was added as a solution in ethylene glycol. Antimony trioxide was used as the polycondensation polymerization catalyst and was added as a solution in ethylene glycol. In addition, 250 lb of slurry containing 2 % Kevlar® nanopulp in ethylene glycol was added. The temperature of the still was raised to 253°C over a period of about 170 minutes. Atmospheric pressure was maintained in the still during the ester exchange reaction. An estimated 1500 lbs (approximately 850 liter) of methanol distillate was recovered. The molten monomer, bis (2-hydroxyethyl) terephthalate, was then dropped from the monomer still to the clave portion of the autoclave.

The ingredients were mixed, agitated, and polymerized by increasing the temperature to 296.6 °C final polymerization temperature. The pressure was reduced to a final pressure of about 0.9 mm Hg over about 165 minutes total polymerization time. The polymer was extruded through casting plate containing approximately 33 holes into strands, which were quenched, cut and boxed.

The polymer was tested and found to have an intrinsic viscosity of approximately 0.62 using a solution method. The polymer was also found to have a crystallization temperature of about 129 °C and a melt point of about 257 °C using DSC.

### Example 2

The polymer from example 1 was molded into dog bone tensile test samples. The item was tested on an lnstron tensile tester at 23 °C and 50 % RH. A Crystal 5005 PET high viscosity control polymer (linear PET homopolymer having an I.V. of 0.85) was molded and tested under the same conditions.

| | **Test Polymer (Ex. 1)** | **Crystar® 5005** |
|---|---|---|
| Max Tensile Stress, ksi | 6.4 | 5.9 |
| Tensile Modulus, ksi | 435.5 | 465.5 |
| % Strain | 1.57 | 1.35 |

### Example 3

The polymer from example 1 was molded into rectangular samples for testing of flexural properties. The samples were tested on an Instron tensile test machine at 23°C and 50% RH. A commercially available Crystar® PET resin was molded and tested at the same conditions for comparison.

| | **Test Polymer (Ex 1)** | **Crystar® 5005** |
|---|---|---|
| **Flexural Strength, ksi** | **14.2** | **11.9** |
| **Flexural Modulus, ksi** | **462.0** | **478.7** |
| **Max Deflection, inches** | **0.192** | **0.144** |

### Example 4

The polymer from example 1 was molded into rectangular samples for testing of impact properties. The samples were tested on an Izod Impact test machine at 23°C and 50% RH. A commercially available Crystar® PET resin was molded and tested at the same conditions for comparison. The average Izod impact strength was 0.239 ft-lb/in for the polymer from example 1 compared to 0.238 ft-lb/in for the commercially available Crystar 5005 polymer.

### Example 5

The polymer from example 1 was molded into 4 in disks to determine abrasion by a Taber Abrasion weight loss method. A commercially available Crystar® 5005 was molded and tested at the same conditions. The test used a CS-17 abrasion wheel with an applied load of 1000 grams. The wear index is determined by the weight loss in milligrams per thousand cycles of abrasion, and a smaller wear index is the preferred result. The results showed the wear index for the polymer of example 1 to be an average of 11.75 versus a wear index of 14.68 for the commercial control polymer.

### Example 6

The polymer from example 1 was melt spun and drawn into a monofilament yarn for evaluation of processing and monofilament properties. The processing conditions and monofilament properties are compared to a commercially available Crystar® 5027 linear PE homopolymer with a 0.72 IV. Polymers were dried overnight at 120 °C and spun through an 60-80-60 mesh pack screen at the conditions shown below to form a round extrudate.

| **Material** | **Melt Temp °C** | **Quench Temp °C** | **Screw Torque Variation, Mg** | **Screw Speed Variation, rmp** | **Die Press psi** |
|---|---|---|---|---|---|
| **Crystar® 5005** | 275 | 140 | 1600+/- 50 | 21 +/ 1 | 370 |
| **Example 1 Polymer** | 275 | 140 | 3000+/- 1000 | 30 +/-10 | 270 |

The difference in die pressure is thought to be due to the difference in polymer inherent viscosity. The test polymer from Example 1 did not result in any pack pressure build up over the extrusion time for the item.

The monofilaments were mechanically drawn in multiple stage with heat applied at constant tension between draw modules. Monofilament properties for the polymer of example 1 are shown below and compared to the properties for a commercial Crystar® 5027 PET resin.

| **Material** | **Draw Ratio** | **Tenacity, gpd** | **Elongation, %** | **Shrinkage, @204°C** |
|---|---|---|---|---|
| | | | | |
| **Example 1 Polymer** | ∼3.5 | ∼2.8 | ∼70 | ∼3 |
| | | | | |
| **Example 1 Polymer** | ∼4.15 | ∼3.0 | ∼50 | ∼6 |
| | | | | |
| **Example 1 Polymer** | ∼4.55 | ∼3.7 | ∼25 | ∼15 |
| | | | | |
| **Crystar® 5027** | ∼4.55 | ∼3.8 | ∼20 | - |

The abrasion resistance was evaluated for monofilaments produced from the Example 1 polymer as well as for the control Crystar® 5027 polymer. The abrasion resistance was determined using a wire squirrel cage test machine. The monofilaments are loaded to 850 grams and then placed in contact with a set of rotating wires. In this method the abrasion resistance is measured as the cycles (of the rotating wires) before monofilament failure, such that a higher number means better abrasion resistance. The polymer of example 1 showed an abrasion resistance approximately equal to that of the Crystar® 5027 control.

### Example 7

Polymer from Example 1 was solid phase polymerized. The polymer produced in Example 1 was evaluated and found to have an IV of approximately 0.7 by the Instron method. Approximately 300 lbs of polymer made in Example 1 was put into a horizontal tumble reactor. The temperature was increased from 25 °C to 135 °C over 220 minutes and the flake was held at 135 °C for 180 minutes to effect crystallization. The temperature was then raised to 235 °C over 150 - minutes. The material was held at temperature for 90 minutes, cooled, and packed out. The final polymer IV was found to by approximately 0.75 by the Instron method which has been determined to be equivalent to 0.72 IV by the solution method.

### Example 8

Polymer from Example 1 was solid phase polymerized. The polymer produced in example 1 was evaluated and found to have an IV of approximately 0.7 by the Instron method. Approximately 300 lbs of polymer made in example 1 was put into a horizontal tumble reactor. The temperature was increased from 25°C to 135°C over 220 minutes and the flake was held at 135°C for 180 minutes to effect crystallization. The temperature was then raised to 234°C over approximately 160 minutes. The material was held at temperature for approximately 500 minutes, cooled, and packed out. The final polymer IV was found to by approximately 0.88 by the Instron method which has been determined to be equivalent to 0.92 IV by the solution method versus a target of 0.95 IV solution equivalent.

### Example 9

The polymer from example 7 was melt spun and drawn into a monofilament yarn for evaluation of processing and monofilament properties. The processing conditions and monofilament properties are compared to a commercially available Crystar® 5027 PET with a 0.72 IV. Polymers were dried overnight at 120°C and spun through a 60-80-60 mesh pack screen at the conditions shown below to form a round extrudate.

| **Material** | **Melt Temp °C** | **Quench Temp °C** | **Screw Torque Variation, Mg** | **Screw Speed Variation, rmp** | **Die Press psi** |
|---|---|---|---|---|---|
| | | | | | |
| **Crystar® 5027 PET** | 275 | 140 | 1600+/- 50 | 21 +/-1 | 370 |
| | | | | | |
| **Example 7 Polymer** | 273 | 140 | 2600+/-100 | 22 | 500 |

The monofilaments were mechanically drawn in multiple stage with heat applied at constant tension between draw modules. Monofilament properties for the polymer of example 7 are shown below and compared to the properties for a commercial Crystar® 5027 PET resin.

| **Material** | **Draw Ratio** | **Ten gpd** | **Modulus gpd** | **Elong, %** | **Shrinkage @ 204 C** |
|---|---|---|---|---|---|
| | | | | | |
| **Example 7 Polymer** | 4.56 | 3.7 | 94 | 23 | 22 |
| | | | | | |
| **Crystar® 5027** | 4.56 | 3.5 | 95 | 33 | 22 |

The abrasion resistance was evaluated for monofilaments produced from the example 7 polymer as well as for the control Crystar® 5027 polymer. The abrasion resistance was determined using a wire squirrel cage test machine. The monofilaments are loaded to 850 grams and then placed in contact with a set of rotating wires. In this method the abrasion resistance is measured as the cycles (of the rotating wires) before monofilament failure, such that a higher number means better abrasion resistance. The polymer of example 7 showed an abrasion resistance of approximately 7400 +/- 300 cycles versus an average of 4000 +/- 500 cycles to failure for the Crystar® 5027 control.

### Example 10

The polymer from example 8 was melt spun and drawn into a monofilament yarn for evaluation of processing and monofilament properties. The processing conditions and monofilament properties are compared to a commercially available Crystar® 5129 linear PET homopolymer with a 0.95 IV. Polymers were dried overnight at 120° C and spun through an 60-80-60 mesh pack screen at the conditions shown below to form a round extrudate.

| **Material** | **Melt Temp °C** | **Quench Temp °C** | **Screw Torque Variation, Mg** | **Screw Speed Variation, rmp** | **Die Press psi** |
|---|---|---|---|---|---|
| | | | | | |
| **Crystar® 5129 PET** | 273 | 140 | 2800+/-100 | 15 | 890 |
| | | | | | |
| **Example 8 Polymer** | 273 | 140 | 4000+/-100 | 15 | 910 |

The monofilaments were mechanically drawn in multiple stage with heat applied at constant tension between draw modules. Monofilament properties for the polymer of example 8 are shown below and compared to the properties for a commercial Crystar® 5027 PET resin.

| **Material** | **Draw Ratio** | **Ten gpd** | **Modulus gpd** | **Elong, %** | **Shrinkage @ 204 C** |
|---|---|---|---|---|---|
| | | | | | |
| **Example 8 Polymer** | 4.56 | 4.1 | 92 | 20 | 26 |
| | | | | | |
| **Crystar® 5129** | 4.56 | 4.1 | 90 | 19 | 25 |

The abrasion resistance was evaluated for monofilaments produced from the example 8 polymer as well as for the control Crystar® 5129 polymer. The abrasion resistance was determined using a wire squirrel cage test machine. The monofilaments are loaded to 500 grams and then placed in contact with a set of rotating wires. In this method the abrasion resistance is measured as the cycles (of the rotating wires) before monofilament failure, such that a higher number means better abrasion resistance. The polymer of example 8 showed an abrasion resistance of approximately 15400 +/-3300 cycles versus an average of 10700 +/-1050 cycles to failure for the Crystar® 5129 control.

### Example 11: Synthesis of PET with 0.5 wt % Kevlar® microfibers

To a 250 milliliter glass flask was added bis(2-hydroxyethyl)terephthalate, (134.75 grams), manganese(II) acetate tetrahydrate, (0.0468 grams), antimony(III) oxide, (0.0367 grams), and slurry (2 weight percent Kevlar® pulp in ethylene glycol, 25.70 grams slurry). The reaction mixture was stirred and heated to 180 °C under a slow nitrogen purge. After achieving 180 °C, the reaction mixture was stirred at 180 °C for 0.2 hours under a slow nitrogen purge. The reaction mixture was then heated to 285 °C over 0.6 hours with stirring. After achieving 285°C, the reaction mixture was stirred at 285 °C for 0.7 hours under a slow nitrogen purge. 41.6 grams of a colorless distillate was collected over this heating cycle. The reaction mixture was then staged to full vacuum with stirring at 285 °C. The resulting reaction mixture was stirred for 0.9 hours under full vacuum, (pressure less than 100 mtorr). The vacuum was then released with nitrogen and the reaction mass allowed to cool to room temperature. An additional 16.7 grams of distillate was recovered and 92.6 grams of a solid product was recovered.

A sample of the product was measured for laboratory relative viscosity, (LRV), as described above and was found to have an LRV of 19.33. This sample was calculated to have an inherent viscosity of 0.60 dUg. The sample also underwent differential scanning calorimetry, (DSC), analysis. A glass transition temperature, (Tg), was observed with an onset of 72.2 °C, a midpoint of 78.3 °C, and an endpoint of 84.4 °C. A crystalline melting temperature, (Tm), was observed at 252.5 °C, (47.0 J/g).

### Example 12: Synthesis of PET homopolymer with 2.5 wt % Kevlar® microfibers

To a 500 milliliter glass flask was added bis(2-hydroxyethyl)terephthalate, (134.75 grams), manganese(II) acetate tetrahydrate, (0.0454 grams), antimony(III) oxide, (0.0375 grams), and Kevlar® pulp slurry, (2 weight percent Kevlar® pulp in ethylene glycol, 130.46 grams slurry). The reaction mixture was stirred and heated to 180°C under a slow nitrogen purge. After achieving 180 °C, the reaction mixture was stirred at 180 °C for 0.2 hours under a slow nitrogen purge. The reaction mixture was then heated to 285 °C over 0.9 hours with stirring. After achieving 285 °C, the reaction mixture was stirred at 285 °C for 0.8 hours under a slow nitrogen purge. 132.1 grams of a colorless distillate was collected over this heating cycle. The reaction mixture was then staged to full vacuum with stirring at 285 °C. The resulting reaction mixture was stirred for 1.0 hour under full vacuum, (pressure less than 100 mtorr). The vacuum was then released with nitrogen and the reaction mass allowed to cool to room temperature. An additional 27.5 grams of distillate was recovered and 92.5 grams of a solid product was recovered.

A sample of the product was measured for laboratory relative viscosity, (LRV), as described above and was found to have an LRV of 19.38. This sample was calculated to have an inherent viscosity of 0.60 dUg. The sample also underwent differential scanning calorimetry, (DSC), analysis. A glass transition temperature, (Tg), was observed with an onset of 72.2 °C, a midpoint of 77.5 °C, and an endpoint of 83.1 °C. A crystalline melting temperature, (Tm), was observed at 256.6 °C, (44.9 J/g).

### Example 13: Sodiosulfoisophthalate copolyester with 0.25 wt % Kevlar® microfibers

To a 500 milliliter glass flask was added bis(2-hydroxyethyl)terephthalate, (298.99 grams), dimethyl 5-sulfoisophthalate, sodium salt, (7.11 grams), sodium acetate, (0.33 grams), manganese(II) acetate tetrahydrate, (0.1039 grams), antimony(III) oxide, (0.0836 grams), and Kevlar® pulp slurry, (2 weight percent Kevlar® pulp in ethylene glycol, 61.20 grams slurry). The reaction mixture was stirred and heated to 180 °C under a slow nitrogen purge. After achieving 180 °C, the reaction mixture was stirred at 180 °C for 0.5 hours under a slow nitrogen purge. The reaction mixture was then heated to 285 °C over 1.9 hours with stirring. After achieving 285 °C, the reaction mixture was stirred at 285 °C for 0.7 hours under a slow nitrogen purge. 103.4 grams of a colorless distillate was collected over this heating cycle. The reaction mixture was then staged to full vacuum with stirring at 285 °C. The resulting reaction mixture was stirred for 0.8 hours under full vacuum, (pressure less than 100 mtorr). The vacuum was then released with nitrogen and the reaction mass allowed to cool to room temperature. An additional 23.0 grams of distillate was recovered and 200.0 grams of a solid product was recovered.

A sample of the product was measured for laboratory relative viscosity, (LRV), as described above and was found to have an LRV of 14.70. This sample was calculated to have an inherent viscosity of 0.51 dUg. The sample underwent differential scanning calorimetry, (DSC), analysis. A glass transition temperature, (Tg), was observed with an onset of 79.9 °C, a midpoint of 80.4 °C, and an endpoint of 80.8 °C. A crystalline melting temperature, (Tm), was observed at 247.0 °C, (46.6 J/g).

### Example 14: Isophthalate copolyester with 0.5 wt % Kevlare® microfibers

To a 500 milliliter glass flask was added bis(2-hydroxyethyl)terephthalate, (183.05 grams), isophthalic acid, (79.74 grams), manganese(II) acetate tetrahydrate, (0.1039 grams), antimony(III) oxide, (0.0836 grams), and Kevlar® pulp slurry, (2 weight percent Kevlar® pulp in ethylene glycol, 60.6 grams slurry). The reaction mixture was stirred and heated to 180 °C under a slow nitrogen purge. After achieving 180°C, the reaction mixture was stirred at 180 °C for 0.4 hours under a slow nitrogen purge. The reaction mixture was then heated to 285 °C over 2.2 hours with stirring. After achieving 285 °C, the reaction mixture was stirred at 285 °C for 0.7 hours under a slow nitrogen purge. 62.1 grams of a colorless distillate was collected over this heating cycle. The reaction mixture was then staged to full vacuum with stirring at 285 °C. The resulting reaction mixture was stirred for 1.6 hours under full vacuum, (pressure less than 100 mtorr). The vacuum was then released with nitrogen and the reaction mass allowed to cool to room temperature. An additional 26.6 grams of distillate was recovered and 216.7 grams of a solid product was recovered.

A sample of the product was measured for laboratory relative viscosity, (LRV), as described above and was found to have an LRV of 23.68. This sample was calculated to have an inherent viscosity of 0.67 dUg. The sample underwent differential scanning calorimetry, (DSC), analysis. A glass transition temperature, (Tg), was observed with an onset of 67.8 °C, a midpoint of 69.7°C, and an endpoint of 71.6°C.

### Example 15: Synthesis of 3GT with 0.5 wt % Kevlar® microfibers

To a 250 milliliter glass flask was added dimethyl terephthalate, (95.15 grams), 1,3-propanediol, (59.66 grams), Tyzor® PEL-G, (8.2 weight percent titanium, 0.1212 grams), and Kevlar® pulp slurry, (2 weight percent Kevlar® pulp in ethylene glycol, 25.36 grams slurry). The reaction mixture was stirred and heated to 180 °C under a slow nitrogen purge. After achieving 180 °C, the reaction mixture was stirred at 180 °C for 0.6 hours under a slow nitrogen purge. The reaction mixture was then heated to 190 °C over 0.1 hours with stirring. After achieving 190 °C, the reaction mixture was stirred at 190 °C for 0.6 hours under a slight nitrogen purge. The reaction mixture was then heated to 200 °C over 0.2 hours with stirring. After achieving 200 °C, the reaction mixture was stirred at 200 °C for 0.7 hours under a slight nitrogen purge. The reaction mixture was then heated to 255 °C over 0.8 hours with stirring. After achieving 255 °C, the reaction mixture was stirred at 255 °C for 0.6 hours under a slow nitrogen purge. 48.6 grams of a colorless distillate was collected over this heating cycle. The reaction mixture was then staged to full vacuum with stirring at 255 °C. The resulting reaction mixture was stirred for 1.4 hours under full vacuum, (pressure less than 100 mtorr). The vacuum was then released with nitrogen and the reaction mass allowed to cool to room temperature. An additional 18.5 grams of distillate was recovered and 90.1 grams of a solid product was recovered.

A sample of the product was measured for laboratory relative viscosity, (LRV), as described above and was found to have an LRV of 28.62. This sample was calculated to have an inherent viscosity of 0.76 dUg. The sample underwent differential scanning calorimetry, (DSC), analysis. A glass transition temperature, (Tg), was observed with an onset of 47.2 °C, a midpoint of 55.3 °C, and an endpoint of 63.2 °C. A crystalline melting temperature, (Tm), was observed at 218.0 °C, (41.0 J/g).

### Example 16: Synthesis of 4GT with 1 wt % Kevlar® microfibers

To a 250 milliliter glass flask was added dimethyl terephthalate, (89.33 grams), 1,4-butanediol, (66.69 grams), Tyzor® PEL-G, (8.2 weight percent titanium, 0.1282 grams), and Kevlar® pulp slurry, (2 weight percent Kevlar® pulp in ethylene glycol, 51.11 grams slurry). The reaction mixture was stirred and heated to 180 °C under a slow nitrogen purge. After achieving 180 °C, the reaction mixture was stirred at 180 °C for 0.3 hours under a slow nitrogen purge. The reaction mixture was then heated to 190 °C over 0.1 hours with stirring. After achieving 190 °C, the reaction mixture was stirred at 190 °C for 0.5 hours under a slight nitrogen purge. The reaction mixture was then heated to 200 °C over 0.1 hours with stirring. After achieving 200 °C, the reaction mixture was stirred at 200 °C for 0.5 hours under a slight nitrogen purge. The reaction mixture was then heated to 255 °C over 0.3 hours with stirring. After achieving 255 °C, the reaction mixture was stirred at 255 °C for 0.8 hours under a slow nitrogen purge. 73.1 grams of a colorless distillate was collected over this heating cycle. The reaction mixture was then staged to full vacuum with stirring at 255 °C. The resulting reaction mixture was stirred for 0.6 hours under full vacuum, (pressure less than 100 mtorr). The vacuum was then released with nitrogen and the reaction mass allowed to cool to room temperature. An additional 21.5 grams of distillate was recovered and 92.0 grams of a solid product was recovered.

A sample of the product was measured for laboratory relative viscosity, (LRV), as described above and was found to have an LRV of 30.17. This sample was calculated to have an inherent viscosity of 0.79 dUg. The sample underwent differential scanning calorimetry, (DSC), analysis. A glass transition temperature, (Tg), was observed with an onset of 40.1 °C, a midpoint of 46.4 °C, and an endpoint of 52.7 °C. A crystalline melting temperature, (Tm), was observed at 201.8 °C, (45.8 J/g).

### Results for Examples 11 through 16

| **Example** | **Polymer Composition** | **Kevlar(R) (wt. %)** | **Finishing Time (hr)** | **Calc IV (dL/g)** | **Tm (°C, (J/g))** |
|---|---|---|---|---|---|
| **11** | 2G/T | 0.5 | 0.9 | 0.60 | 252.5(47.0) |
| **12** | 2G/T | 2.5 | 1.0 | 0.60 | 256.6(44.9) |
| **13** | 2G/T:DRL-6 (98:2) | 0.25 | 0.8 | 0.51 | 247.0 (46.6) |
| **14** | 2G/T:l (60:40) | 0.5 | 1.6 | 0.67 | [note: Tg = 69.7] |
| **15** | 2G:3G/T | 0.5 | 1.4 | 0.76 | 218.0 (41.0) |
| **16** | 2G:4G/T | 1.0 | 0.6 | 0.79 | 201.8 (45.8) |

## Claims

1. A polyester composition comprising a thermoplastic polyester and from 0.1 to 2.5 weight percent of one or more microfibers, based on the total weight of the polyester composition, wherein said microfibers have a volume average length of from 0.1 to less than 100 µm and a diameter of 8 to 12 µm, said microfibers comprising organic microfibers.

2. The polyester composition of claim 1, comprising nanofibers.

3. The polyester composition of claim 1, comprising from 0.2 to 1 weight percent of said microfibers.

4. The polyester composition of claim 1, wherein said polyester comprises polyethylene terephthalate.

5. The polyester composition of claim 4, wherein said polyester is a polyethylene terephthalate homopolymer.

6. The polyester composition of claim 4, wherein said polyester is a polyethylene terephthalate copolymer.

7. The polyester composition of claim 6, wherein said organic microfibers comprise a polymeric material selected from the group consisting of aliphatic polyamides, polyesters, polyacrylonitriles, polyvinyl alcohols, polyolefins, polyvinyl chlorides, polyvinylidene chlorides, polyurethanes, polyfluorocarbons, phenolics, polybenzimidazoles, polyphenylenetriazoles, polyphenylene sulfides, polyoxadiazoles, polyimides, aromatic polyamides, cellulose, cotton, silk, and wool.

8. The polyester composition of claim 1, wherein said microfibers comprise inorganic microfibers.

9. The polyester composition of claim 8, wherein said inorganic microfibers comprise a material selected from the group consisting of silica, glass, carbon, boron, boron carbide, wollastonite and silicon carbide.

10. The polyester composition of claim 1, further comprising one or more fillers.

11. The polyester composition of claim 10, wherein the one or more fillers comprise titanium dioxide.

12. The polyester composition of claim 1, further comprising one or more tougheners, which includes a material enhancing the durability of the polyester or increasing its resistance to impact.

13. A molded article comprising the polyester composition of any of claim 1-12.

14. A monofilament comprising the polyester composition of any of claims 1-12.

15. A film comprising the polyester composition of any of claims 1-12.

16. A process for making the polyester composition of any one of claims 1-12, said process comprising the step of agitating a starting material in a liquid medium to reduce the size of the starting material and to form a slurry; and wherein said liquid medium comprises one or more non-aqueous solvents, monomers or polymer precursors.

## Patentansprüche

1. Polyesterzusammensetzung umfassend einen thermoplastischen Polyester und 0,1 bis 2,5 Gewichtsprozent einer oder mehrerer Mikrofasern, auf das Gesamtgewicht der Polyesterzusammensetzung bezogen, wobei die Mikrofasern eine volumendurchschnittliche Länge von 0,1 bis weniger als 100 µm und einen Durchmesser von 8 bis 12µm aufweisen, wobei die Mikrofasern organische Mikrofasern umfassen.

2. Polyesterzusammensetzung nach Anspruch 1, die Nanofasern umfasst.

3. Polyesterzusammensetzung nach Anspruch 1, die 0,2 bis 1 Gewichtsprozent der Mikrofasern umfasst.

4. Polyesterzusammensetzung nach Anspruch 1, wobei der Polyester Polyethylenterephthalat umfasst.

5. Polyesterzusammensetzung nach Anspruch 4, wobei der Polyester ein Polyethylenterephthalat-Homopolymer ist.

6. Polyesterzusammensetzung nach Anspruch 4, wobei der Polyester ein Polyethylenterephthalat-Copolymer ist.

7. Polyesterzusammensetzung nach Anspruch 6, wobei die organischen Mikrofasern ein polymeres Material umfassen ausgewählt aus der Gruppe bestehend aus aliphatischen Polyamiden, Polyestern, Polyacrylnitrilen, Polyvinylalkoholen, Polyolefinen, Polyvinylchloriden, Polyvinylidenchloriden, Polyurethanen, Polyfluorkohlenstoffen, Phenolen, Polybenzimidazolen, Polyphenylentriazolen, Polyphenylensulfiden, Polyoxadiazolen, Polyimiden, aromatischen Polyamiden, Cellulose, Baumwolle, Seide und Wolle.

8. Polyesterzusammensetzung nach Anspruch 1, wobei die Mikrofasern anorganische Mikrofasern umfassen.

9. Polyesterzusammensetzung nach Anspruch 8, wobei die anorganischen Mikrofasern ein Material umfassen ausgewählt aus der Gruppe bestehend aus Siliciumdioxid, Glas, Kohlenstoff, Bor, Borcarbid, Wollastonit und Siliciumcarbid.

10. Polyesterzusammensetzung nach Anspruch 1, des Weiteren einen oder mehrere Füllstoffe umfassend.

11. Polyesterzusammensetzung nach Anspruch 10, wobei der eine oder die mehreren Füllstoffe Titandioxid umfasst/umfassen.

12. Polyesterzusammensetzung nach Anspruch 1, des Weiteren einen oder mehrere Zähigkeitsmittel umfassend, die ein Material enthalten, das die Dauerhaltbarkeit des Polyesters verbessert oder seine Schlagfestigkeit erhöht.

13. Geformter Artikel umfassend die Polyesterzusammensetzung nach einem der Ansprüche 1-12.

14. Monofilament umfassend die Polyesterzusammensetzung nach einem der Ansprüche 1-12.

15. Folie umfassend die Polyesterzusammensetzung nach einem der Ansprüche 1-12.

16. Verfahren zum Herstellen der Polyesterzusammensetzung nach einem der Ansprüche 1-12, wobei das Verfahren den Schritt des Rührens eines Ausgangsmaterials in einem flüssigen Medium zum Reduzieren der Größe des Ausgangsmaterials und Bilden einer Aufschlämmung umfasst; und wobei das flüssige Medium ein oder mehrere nichtwässrige Lösungsmittel, Monomere oder Polymervorläufer umfasst.

## Revendications

1. Composition de polyester comprenant un polyester thermoplastique et de 0,1 à 2,5 % en poids d'une ou plusieurs microfibre(s), basé(s) sur le poids total de la composition de polyester, dans laquelle lesdites microfibres ont une longueur moyenne en volume de 0,1 à moins de 100 µm et un diamètre de 8 à 12 µm, lesdites microfibres comprenant des microfibres organiques.

2. Composition de polyester selon la revendication 1, comprenant des nanofibres.

3. Composition de polyester selon la revendication 1, comprenant de 0,2 à 1 % en poids desdites microfibres.

4. Composition de polyester selon la revendication 1, dans laquelle ledit polyester comprend du poly(téréphtalate d'éthylène).

5. Composition de polyester selon la revendication 4, dans laquelle ledit polyester est un homopolymère de poly(téréphtalate d'éthylène).

6. Composition de polyester selon la revendication 4, dans laquelle ledit polyester est un copolymère de poly(téréphtalate d'éthylène).

7. Composition de polyester selon la revendication 6, dans laquelle lesdites microfibres organiques comprennent un matériau polymère choisi parmi le groupe constitué des polyamides aliphatiques, des polyesters, des polyacrylonitriles, des poly(alcool de vinyle), des polyoléfines, des poly(chlorures de vinyle), des poly(chlorures de vinylidène), des polyuréthanes, des polyfluorocarbones, des substances phénoliques, des polybenzimidazoles, des polyphénylènetriazoles, des sulfures de polyphénylène, des polyoxadiazoles, des polyimides, des polyamides aromatiques, de la cellulose, du coton, de la soie et de la laine.

8. Composition de polyester selon la revendication 1, dans laquelle lesdites microfibres comprennent des microfibres inorganiques.

9. Composition de polyester selon la revendication 8, dans laquelle lesdites microfibres inorganiques comprennent un matériau choisi parmi le groupe constitué de la silice, du verre, du carbone, du bore, du carbure de bore, de la wollastonite et du carbure de silicium.

10. Composition de polyester selon la revendication 1, comprenant en outre une ou plusieurs charge(s).

11. Composition de polyester selon la revendication 10, dans laquelle la une ou plusieurs charge(s) comprend(nent) du dioxyde de titane.

12. Composition de polyester selon la revendication 1, comprenant en outre un ou plusieurs durcissant(s) qui inclut(ent) un matériau renforçant la durabilité du polyester ou accroissant sa résistance aux chocs.

13. Article moulé comprenant la composition de polyester selon l'une quelconque des revendications 1 à 12.

14. Monofilament comprenant la composition de polyester selon l'une quelconque des revendications 1 à 12.

15. Film comprenant la composition de polyester selon l'une quelconque des revendications 1 à 12.

16. Procédé de fabrication de la composition de polyester selon l'une quelconque des revendications 1 à 12, ledit procédé comprenant l'étape d'agitation d'un matériau de départ dans un milieu liquide pour réduire la taille du matériau de départ et pour former une suspension; et dans lequel ledit milieu liquide comprend un ou plusieurs solvant(s) non aqueux, monomère(s) ou précurseur(s) de polymère.
